# EUROPEAN PATENT SPECIFICATION

(11) **EP 1 829 382 B1**
(45) Date of publication and mention of the grant of the patent: **18.06.2008**
(21) Application number: 05850081.0
(22) Date of filing: 14.12.2005
(51) Int. Cl.: H04N 7/52, H04N 7/62

(54) **SYNCHRONIZING AUDIO WITH DELAYED VIDEO**
SYNCHRONISIERUNG VON AUDIO MIT VERZÖGERTEM VIDEO
SYNCHRONISATION D'UNE COMPOSANTE AUDIO AVEC UNE COMPOSANTE VIDEO RETARDEE

(30) Priority: 15.12.2004 US 636366 P
(43) Date of publication of application: 05.09.2007
(73) Proprietor: Koninklijke Philips Electronics N.V., 5621 BA Eindhoven (NL)
(72) Inventor: NIEUWENHUIZEN, Michel, W., NL-5656 AA Eindhoven (NL)
(74) Representative: Groenendaal, Antonius W. M.
(86) International application number: PCT/IB2005/054231
(87) International publication number: WO 2006/064477

(56) References cited:
- EP-A- 0 562 972
- EP-A- 1 067 773
- EP-A- 1 341 386
- WO-A-00/05901
- US-A- 4 313 135
- US-B1- 6 414 960
- WIENS S ET AL: "Keeping It Short - A Comparison of Methods for Brief Picture Presentation" PSYCHOLOGICAL SCIENCE, BLACKWELL PUBLISHERS, MALDEN, MA, US, vol. 15, no. 4, April 2004 (2004-04), pages 282-285, XP008037058 ISSN: 0956-7976

## Description

The invention relates to an apparatus for compensating for loss of synchronization between video and audio presented to a viewer due to a processing delay of the video.

The invention further relates to a video source for providing a video output and a related audio output comprising such an apparatus for compensating.

The invention further relates to a method of compensating for loss of synchronization between video and audio presented to a viewer due to a processing delay of the video.

Video display apparatus, such as television and monitor equipment, includes complex video processing circuitry and software to process the video component of a video signal. This processing generally imposes delays in the transmission of the video component that are substantially longer than any delays imposed on the audio component of the video signal and can adversely affect the synchronism between the audio and video presented to the viewer.

When the audio and video components both pass through a common apparatus, it is possible to maintain synchronism by adding a compensating transmission delay to the audio component. However, in cases where both of these components do not pass through a common apparatus, such compensation is not easily achieved. For example, if a DVD player is the source of the video signal, the video and audio components might pass through different audio and video equipments, where the manufacturer of the audio equipment does not know the duration of the processing delay in the video component.

In accordance with the invention, compensation for loss of synchronization between video and audio, because of a video signal processing delay, is achieved by transmitting a video test signal representing a sequence of test images to be presented by a display device. The video test signal is subjected to the processing delay, before the sequence of test images is presented. A light detector receives light from the sequence of test images and produces a received test signal representative of the sequence of test images. A delay of the audio to compensate for the video processing delay is effected by means of a controller. The controller determines the delay needed by correlating the received test signal with the transmitted test signal.

Modifications of the apparatus for compensating for loss of synchronization and variations thereof may correspond to modifications and variations thereof of the video source and the method, being described.

These and other aspects of the apparatus for compensating for loss of synchronization, the video source and the method, according to the invention will become apparent from and will be elucidated with respect to the implementations and embodiments described hereinafter and with reference to the accompanying drawings, wherein:
Fig. 1 is a block diagram illustrating an exemplary embodiment of a video system including processing delay compensation;
Fig. 2 is a flow diagram illustrating an exemplary embodiment of a delay compensation method;
Fig. 3 is a schematic illustration of the average luminance of respective images of a series of images; and
Fig. 4 is a schematic illustration of an exemplary embodiment of a light detector for use in the apparatus for compensating for loss of synchronization.

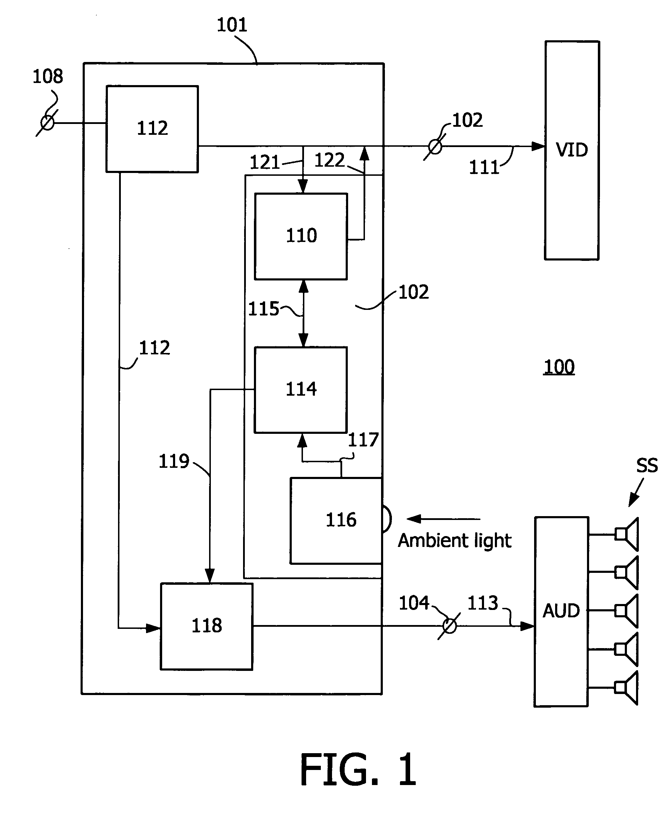

The video system of Fig. 1 includes a video source 101 coupled to an audio device AUD and a display device VID. The video source 101 can be any device that provides a video signal, e.g. a DVD player, a set-top box or a satellite receiver. The video signal may be read from a storage medium, like DVD or tape. Alternatively, the video signal is provided to the input connector 108. The audio device AUD can be part of the video source 101 or a separate piece of equipment, e.g. an audio receiver for driving a speaker system SS. The display device VID can be a television or monitor or other equipment for displaying video images.

The video source 101 includes a video generator 112, e.g. an MPEG decoder, for supplying a video signal having a video component, provided at a video output connector 102, and an audio component, provided at an audio output connector 104. These components may be provided in the form of either digital or analog signals, as is well known in the art.

The video component provided at video output connector 102 is transmitted over a line 111 to the display device VID, where a video processing delay occurs before the images represented by the video component is displayed to the viewer. This delay typically includes a number of smaller cumulative delays including, for example, processing for noise reduction, multi- dimensional scaling, application of natural-motion, i.e. temporal up-conversion algorithms, and varies with the type of display device (e.g., Plasma, LCD, DMD, CRT). The duration of the processing delay of the video in the display device may be unknown to the manufacturer of the video source 101, particularly if these equipments are from different manufacturers.

The audio component provided by the video generator 112 is transmitted through an audio delay device 118 having a controllable variable delay, and then over a line 113 to the audio device AUD. Note that the audio delay device 118 need not be a separate device. For example, if the video generator 112 incorporates an MPEG decoder, the desired delay can be effected by, for example, manipulating timestamps in the MPEG program stream. Besides that, the audio delay device 118 is optional for the video source 101. It may alternatively be implemented in a separate apparatus or in the audio device AUD.

The video source 101 as depicted in Fig. 1 comprises an apparatus 102 for compensating for loss of synchronization between video and audio presented to a viewer due to a processing delay of the video component. The apparatus 102 comprises:
- video transmitting means 110 for transmitting a test signal representing a sequence of test images to presented by the display device VID after said test signal is subjected to said processing delay;
- a light detector 116 for receiving light from the display device VID based on the sequence of test images and producing a received test signal representative of the sequence of test images; and
- a controller 114 for: correlating the received test signal provided via line 117 with the transmitted test signal provided via line 115; determining the delay between said signals; and outputting an audio delay signal via line 119 on basis of the delay between said signals.

In this disclosure two main embodiments of the apparatus 102 for compensating for loss of synchronization are disclosed:
- In the first embodiment of the apparatus 102 for compensating for loss of synchronization, the video transmitting means 110 comprises a test signal generator (not depicted), which is arranged to generate a predetermined test signal.
- In the second embodiment of the apparatus 102 for compensating for loss of synchronization, the video transmitting means 110 comprises detecting means (not depicted) for detecting the sequence of test images in a received series of images. That means that in this embodiment the video transmitting means 110 is arranged to transmit the test signal on basis of video content as received from the video generator 112 via line 121. This video content corresponds to normal video content representing e.g. a movie an episode of a soap, or a cartoon. That means normal video content, which a viewer would watch for entertainment or education purposes and which he would not directly associate with a test signal for adjusting a video system.

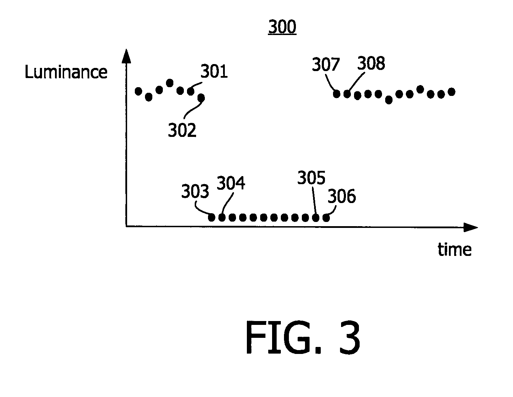

First the working of the first embodiment of the apparatus 102 for compensating for loss of synchronization is explained. The working of the second embodiment of the apparatus 102 for compensating for loss of synchronization is explained in connection with Fig. 3.

When activated, the test signal generator simultaneously transmits a video test signal over the lines 111 and 115 to the display device VID and to the controller 114, respectively. The test signal generator can be set to produce video test signals representing one or more desired test patterns for display by the display device VID. In an exemplary embodiment, the test generator produces a video test signal representing a sequence of alternating darker and lighter images, such as solid black and white screens, to be produced by the display device VID.

The light detector 116 is located to receive the ambient room light including light from the test pattern produced by the display device VID. The light detector 116 converts the received light to a detection signal, which is influenced by light from the displayed test pattern. Specifically, the detection signal includes a test signal component (the "received test signal") representing the test pattern and transmits it via line 117 to the controller 114.

The controller 114 operates to determine the delay that must be provided by the audio delay device 118 to place the audio from the audio device AUD in synchronism with the image displayed by the display device VID. In order to do this, controller 114 measures the delay between the transmission of the video test signal and the reception of the test signal, representing the test pattern produced by the display device VID. The controller 114 then transmits an audio delay signal representing the measured delay over a line 119 to audio delay device 118, which effects a corresponding delay of the audio signal transmitted to the audio device AUD.

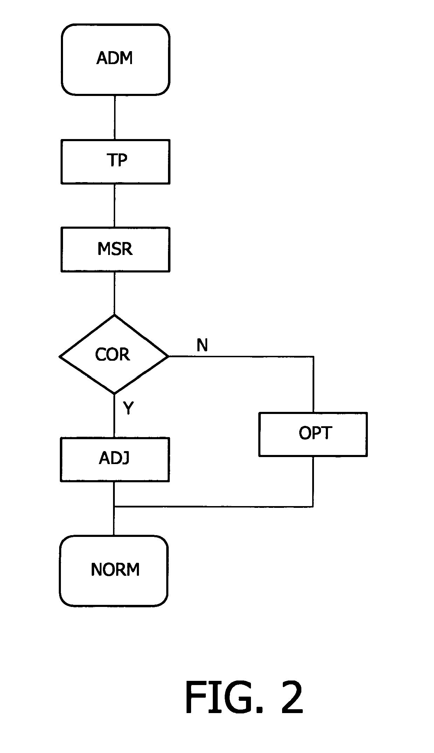

Fig. 2 illustrates an exemplary process for operating the video system of Fig. 1 to compensate for the undesirable delay of the video relative to the audio presented to a viewer. A typical example of the negative consequences of such a delay is a loss of lip synch of a speaking person in the displayed image. This loss is easily noticeable with a video delay of as little as, for example, one-tenth of a second or less. Referring to Fig. 2:

At ADM, an audio delay-measuring mode is entered to begin the process of compensating for any delay of the video relative to the audio presented to the viewer. Conveniently this would be done as part of a set-up program that can be performed by the controller 114 when the video system 100 is installed or at any other desired time.

At TP, the controller 114 transmits over line 115 a signal ordering the test signal generator in the video transmitting means 110 to begin transmitting the video test signal over lines 111 and 115. (Alternatively, line 115 need only pass to the controller 114 the timing of the test pattern represented by the video test signal.) Optionally, the test signal generator may be elsewhere in the system, and may even be incorporated in the controller 114 itself. The repetition rate of the test pattern (e.g., alternating black and white full screen images) is preferably long in comparison to the longest delay expected. To avoid ambiguity, the cycle of the full test-pattern sequence is at least twice the longest expected delay.

At MSR, the controller 114 begins sampling the detection signal produced by the detector 116. Sampling should begin in a time period shorter than the minimum expected delay time effected by the video processing. The sampling interval should be at least as small as the desired accuracy of measurement of the video processing delay. For example, for a good apparent lip synch, as observed by a typical viewer, an accuracy of about 10 milliseconds is desirable. In an exemplary system, such an accuracy was readily obtained by using a pattern of alternating black and white full screen images, each having a duration of about 1.0 second and by sampling at an interval of about 1 to 5 milliseconds. Sampling continues for a period that is long enough to correlate the received test signal carried by the received detection signal with the transmitted video test signal. The exemplary system had a sampling period of several seconds, during which the controller 114 attempts to correlate black-to-white and white-to-black transitions detected in the detection signal with corresponding transitions in the transmitted video test signal. The algorithm used by the controller 114 can be very simple to very complex, depending on the desired capability of the extraction of the detected pattern from a noisy received test signal.

At COR, the controller 114 determines whether the correlation was successful. Correlation will not be possible if the light from the test pattern is not clearly distinguishable from the ambient light itself. This can happen under adverse light conditions, for example, if sunlight shines directly on a light sensor of the light detector 116 or if the intensity of the ambient light is varying similarly to that of the test pattern. If correlation is successful, the next step in the process will be ADJ; if not, it will be OPT.

At ADJ, following successful correlation, the controller 114 determines the time delay between the transmitted test signal and the received test signal. The controller 114 then correspondingly adjusts the delay provided by the audio delay device 118 to bring the audio produced by audio device AUD in synch with the video image presented by the display device VID.

At OPT, the controller 114 transmits a message via the video transmitting means 110 to the display device VID advising the viewer that the synchronizing process was not successful. The message may also suggest corrective actions for improving the ambient light conditions, such as darkening the room or relocating the ambient light sensor relative to the display device or providing a reflective surface for increasing the light directed from the display and onto the light detector 116. Depending on the capability of the video source 101 to intelligently communicate with a remote control, further options can be explained by messages from the controller 114. For example, the viewer can be guided through a manual adjustment to synchronize the audio and video while watching the screen image, e.g. by selecting a delay from a number of predetermined default settings covering a range of probable delays for known display devices.

At NORM, following both ADJ and OPT, the controller 114 returns the video source to its normal mode of operation.

Fig. 3 is a schematic illustration of a time sampled signal 300 comprising samples 301-308 representing average luminances of respective images of a series of images. The x-axis of the illustration 300 corresponds to time. The y-axis corresponds to the average luminance value of respective images of a series of images. We refer to Fig. 3 to explain the working of the second embodiment of the apparatus 102 for compensating for loss of synchronization.

In the second embodiment of the apparatus 102 for compensating for loss of synchronization, the video transmitting means 110 is arranged to generate the test signal on basis of video content as received from the video generator 112 via line 121. That means that standard/normal video content representing e.g. a movie or episode of a soap is used for by the apparatus 102 for compensating for loss of synchronization in order to realize the synchronization. That is achieved by analyzing the video content as provided by the video generator 112 and received by the video transmitting means 110 via line 121. Typically, the video content which is to be displayed by the display device VID for normal viewing purposes, has characteristics which are appropriate for determining the processing delay of the video and hence for deriving the audio delay signal from it. Such a characteristic is e.g. a sudden change in average luminance:

E.g. a first bright/light image, i.e. having a relatively high average luminance is succeeded by a second dark image, i.e. having a relatively low average luminance. See in Fig. 3 the transition from the samples with reference numbers 301,302 to the samples with reference numbers 303,304;

E.g. a third dark image is succeeded by a fourth bright/light image. See in Fig. 3 the transition from the samples with reference numbers 305,306 to the samples with reference numbers 307,308.

Such a sudden change in average luminance typically occurs at a scene change. Typically a number of black video frames, i.e. video images are inserted between successive scenes. The detection of scene changes or other relatively sharp transitions in average luminance in the video contents is preferably achieved by computing a difference between a first average luminance value of pixels of a first image of the series of images as received from video generator 112 and a second average luminance value of pixels of a second image of the series of images, succeeding the first image and as received from video generator 112, and comparing the computed difference with a predetermined threshold. If the predetermined threshold is exceeded, then the corresponding first and second image are used to form the or a portion of the sequence of test images corresponding to the test signal.

The rest of the working of the second embodiment of the apparatus 102 for compensating for loss of synchronization is substantially equal to the working of the first embodiment of the apparatus 102 for compensating for loss of synchronization, as explained in connection with Fig.1 and Fig. 2. So, basically the main difference is the creation of the test signal representing a sequence of test images. Related to that difference the following is to be noted. The operation of determining the processing delay of the video and optionally adapting the audio delay with the second embodiment of the apparatus 102 for compensating for loss of synchronization can be a continuous process. That means e.g. that the audio delay signal of the video system 100 comprising the video source 101 coupled to the audio device AUD and the display device VID can be updated while the viewer is watching his favorite movies. There is no need for a dedicated measuring/adjustment procedure as explained in connection with Fig. 2.

Preferably multiple bright/dark and/or dark/bright transitions in the received video content are used for determining the actual audio delay signal.

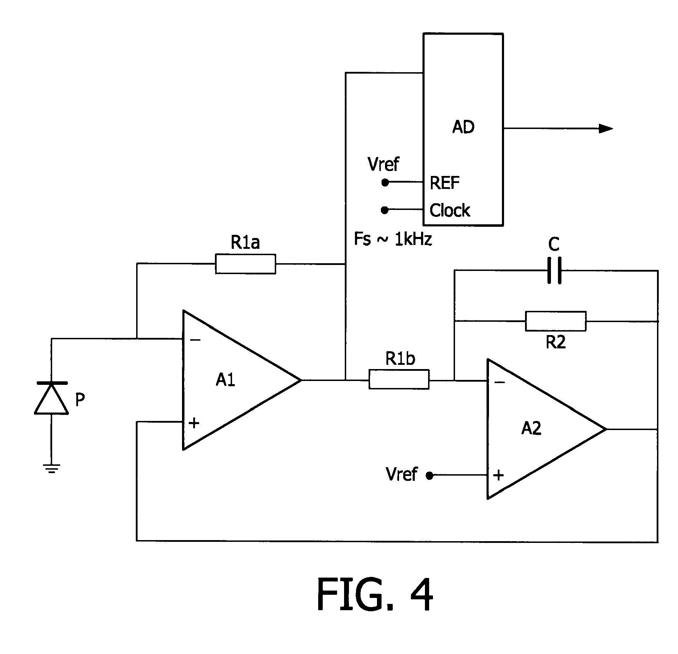

Fig. 4 illustrates an exemplary embodiment of the light detector 116. Although design of a variety of such light detectors is well within the skill of the art, this embodiment demonstrates that such a detector can be made at relatively low expense components with a few simple components. The light detector 116 includes a first amplifier circuit including a photo-diode P, operational amplifier A1 and resistors R1a, R1b; a second amplifier circuit including operational amplifier A2, resistor R2, and capacitor C; and an A/D converter AD.

The photo-diode P is disposed where it will sense the ambient light in the area where the display device VID is operative. Conveniently it will be incorporated in a housing of the video source 101 or other component containing the light detector 116, but it may also be remotely located. The current passing through the photodiode varies as a function of the incident light. The first amplifier circuit primarily functions to convert the photodiode current to an amplified voltage representative of the incident light intensity. The second amplifier circuit functions as both a comparator and an integrator. It cooperates with the first amplifier circuit to keep the first amplifier in its linear operating range. An inexpensive low-conversion speed A/D converter may be utilized because both resolution and conversion speed may be low. The A/D converter in this exemplary light detector 116 operates at a conversion clock rate of 1kHz.

It should be noted that the above-mentioned embodiments illustrate rather than limit the invention and that those skilled in the art will be able to design alternative embodiments without departing from the scope of the appended claims. In the claims, any reference signs placed between parentheses shall not be constructed as limiting the claim. The word 'comprising' does not exclude the presence of elements or steps not listed in a claim. The word "a" or "an" preceding an element does not exclude the presence of a plurality of such elements. The invention can be implemented by means of hardware comprising several distinct elements and by means of a suitable programmed computer. In the unit claims enumerating several means, several of these means can be embodied by one and the same item of hardware or software. The usage of the words first, second and third, etcetera do not indicate any ordering. These words are to be interpreted as names. No specific sequence of acts is intended to be required unless specifically indicated.

## Claims

1. Apparatus (102) for compensating for loss of synchronization between video and audio presented to a viewer due to a processing delay of the video, said apparatus (102) comprising:
- video transmitting means (110) for transmitting a test signal representing a sequence of test images to be presented by a display device after said test signal is subjected to said processing delay;
- a light detector (116) for receiving light from the display device based on the sequence of test images and producing a received test signal representative of the sequence of test images; and
- a controller (114) for: i) correlating the received test signal (117) with the transmitted test signal (115), ii) determining the delay between said signals, and iii) outputting an audio delay signal (119) on basis of the delay between said signals (115, 117).

2. Apparatus (102) as claimed in claim 1, wherein the video transmitting means (110) comprises detecting means for detecting the sequence of test images in a received series of images.

3. Apparatus (102) as claimed in claim 2, wherein the detecting means are arranged to detect the sequence of test images by determining that a difference between a first measure of a first image of the sequence of test images and a second measure of a second image of the sequence of test images exceeds a predetermined threshold

4. Apparatus (102) as claimed in claim 3, wherein the detecting means is arranged to compute a first average luminance value of pixels of the first image of the sequence as first measure and to compute a second average luminance value of pixels of the second image of the sequence as second measure.

5. Apparatus (102) as claimed in claim 1, wherein the video transmitting means (110) comprises a signal generator for generating the test signal.

6. Apparatus (102) as claimed in claim 5, wherein the sequence of test images corresponds to a single image.

7. Apparatus (102) as claimed in claim 5, wherein the signal generator is arranged to generate a test pattern.

8. Apparatus (102) as claimed in claim 7, wherein the test pattern comprises alternating darker and lighter images.

9. Apparatus (102) as claimed in claim 8, wherein the darker and lighter images repeat at an interval that is at least twice as long as the processing delay.

10. A video source (101) for providing a video output and a related audio output, the video source comprising:
- video output means (102) for providing the video output;
- audio output means (104) for providing the audio output;
- an apparatus (102) for compensating for loss of synchronization between video and audio presented to a viewer, as claimed in any of the claims above, the video based on the video output and the audio based on the audio output.

11. A video source (101) as claimed in claim 10, comprising an audio delay device 18 for effecting a controllable delay in the audio output on basis of the audio delay signal of the apparatus (102) for compensating.

12. Method of compensating for loss of synchronization between video and audio presented to a viewer due to a processing delay of the video, said method comprising:
- transmitting a test signal representing a sequence of test images to be presented by a display device after said test signal is subjected to said processing delay;
- detecting light from the display device based on the sequence of test images and producing a received test signal representative of the sequence of test images; and
- correlating the received test signal with the transmitted test signal;
- determining the delay between said signals, and outputting an audio delay signal on basis of the delay between said signals.

## Patentansprüche

1. Anordnung (102) zum Ausgleichen von Verlust der Synchronisation zwischen einem Zuschauer angebotenem Video und Audio, und zwar wegen einer Verarbeitungsverzögerung des Videos, wobei die genannte Anordnung (102) Folgendes umfasst:
- Videoübertragungsmittel (110) zum Übertragen eines Testsignals, das eine Folge von Testbildern darstellt, die von einer Wiedergabeanordnung präsentiert werden, nachdem das genannte Testsignal der genannten Verarbeitungsverzögerung ausgesetzt worden ist;
- einen Lichtdetektor (116) zum Empfangen von Licht von der Wiedergabeanordnung, und zwar auf Basis der Folge von Testbildern und zum Erzeugen eines empfangenen Testsignals, das für die Folge von Testbildern repräsentativ ist; und
- einen Controller (114) zum
- i) Korrelieren des empfangenen Testsignals (117) mit dem übertragenen Testsignal (115),
- ii) Ermitteln der Verzögerung zwischen den genannten Signalen, und
- iii) Ausliefern eines Audioverzögerungssignals (119) auf Basis der Verzögerung zwischen den genannten Signalen (115, 117).

2. Anordnung (102) nach Anspruch 1, wobei die Videoübertragungsmittel (110) Detektionsmittel zum Detektieren der Folge von Testbildern in einer empfangenen Reihe von Bildern aufweisen.

3. Anordnung (102) nach Anspruch 2, wobei die Detektionsmittel dazu vorgesehen sind, die Folge von Testbildern dadurch zu detektieren, dass ermittelt wird, dass eine Differenz zwischen einem ersten Maß eines ersten Bildes der Folge von Testbildern und einem zweiten Maß eines zweiten Bildes der Folge von Testbildern eine vorbestimmte Schwelle überschreitet.

4. Anordnung (102) nach Anspruch 3, wobei die Detektionsmittel dazu vorgesehen sind, einen ersten mittleren Leuchtdichtewert von Pixeln des ersten Bildes der Folge als erstes Maß zu berechnen und einen zweiten mittleren Leuchtdichtewert von Pixeln des zweiten Bildes der Folge als zweites Maß zu berechnen.

5. Anordnung (102) nach Anspruch 1, wobei die Videoübertragungsmittel (110) einen Signalgenerator zum Erzeugen des Testsignals aufweisen.

6. Anordnung (102) nach Anspruch 5, wobei die Folge von Testbildern einem einzigen Bild entspricht.

7. Anordnung (102) nach Anspruch 5, wobei der Signalgenerator dazu vorgesehen ist, ein Testbild zu erzeugen.

8. Anordnung (102) nach Anspruch 7, wobei das Testbild abwechselnd dunklere und hellere Bilder aufweist.

9. Anordnung (102) nach Anspruch 8, wobei die dunkleren und die helleren Bilder sich mit einem Intervall wiederholen, das wenigstens zweimal länger ist als die Verarbeitungsverzö gerung.

10. Videoquelle (101) zum Schaffen eines Videoausgangssignals und eines relatierten Audioausgangssignals, wobei die Videoquelle Folgendes umfasst:
- Videoausgangsmittel (102) zum Schaffen eines Videoausgangssignals,
- Audioausgangsmittel (104) zum Schaffen eines Audioausgangssignals,
- eine Anordnung (102) zum Ausgleichen eines Verlustes der Synchronisation zwischen einem Zuschauer angebotenem Video und Audio nach einem der vorstehenden Ansprüche, wobei das Video aus dem Videoausgangssignal und das Audio auf dem Audioausgangssignal basiert.

11. Videoquelle (101) nach Anspruch 10, die eine Audioverzögerungsanordnung (18) aufweist zum Effektuieren einer steuerbaren Verzögerung in dem Audioausgangssignal auf Basis der Audioverzögerungssignals der Anordnung (102) zum Ausgleichen.

12. Verfahren zum Ausgleichen eines Verlustes an Synchronisation zwischen einem Zuschauer angebotenem Video und Audio, und zwar wegen einer Verarbeitungsverzögerung des Videos, wobei das genannte Verfahren die nachfolgenden Verfahrensschritte umfasst:
- das Übertragen eines Testsignals, das eine Folge von Testbildern darstellt, die von einer Wiedergabeanordnung präsentiert werden sollen, nachdem das genannte Testsignal der genannten Verarbeitungsverzögerung ausgesetzt worden ist;
- das Detektieren von Licht von der Wiedergabeanordnung, und zwar auf Basis der Folge von Testbildern und das Erzeugen eines empfangenen Testsignals, das für die Folge von Testbildern repräsentativ ist; und
- das Korrelieren des empfangenen Testsignals mit dem übertragenen Testsignal,
- das Ermitteln der Verzögerung zwischen den genannten Signalen, und
- das Ausliefern eines Audioverzögerungssignals auf Basis der Verzögerung zwischen den genannten Signalen.

## Revendications

1. Appareil (102) pour compenser la perte de synchronisation entre la vidéo et l'audio qui est présentée à un spectateur en raison d'un retard de traitement de la vidéo, ledit appareil (102) comprenant:
- des moyens de transmission vidéo (110) pour la transmission d'un signal d'essai représentant une séquence d'images d'essai à présenter par un dispositif d'affichage après que ledit signal d'essai est soumis audit retard de traitement;
- un détecteur de lumière (116) pour recevoir la lumière en provenance du dispositif d'affichage sur la base de la séquence d'images d'essai et pour produire un signal d'essai reçu qui est représentatif de la séquence d'images d'essai; et
- un contrôleur (114) pour: i) corréler le signal d'essai reçu (117) avec le signal d'essai transmis (115), ii) déterminer le retard entre lesdits signaux et iii) sortir un signal de retard audio (119) sur la base du retard entre lesdits signaux (115, 117).

2. Appareil (102) selon la revendication 1, dans lequel les moyens de transmission vidéo (110) comprennent des moyens de détection pour détecter la séquence d'images d'essai dans une série reçue d'images.

3. Appareil (102) selon la revendication 2, dans lequel les moyens de détection sont agencés de manière à détecter la séquence d'images d'essai en déterminant qu'une différence entre une première mesure d'une première image de la séquence d'images d'essai et une deuxième mesure d'une deuxième image de la séquence d'images d'essai dépasse un seuil prédéterminé.

4. Appareil (102) selon la revendication 3, dans lequel les moyens de détection sont agencés de manière à calculer une première valeur de luminance moyenne des pixels de la première image de la séquence en tant que première mesure et à calculer une deuxième valeur de luminance moyenne des pixels de la deuxième image de la séquence en tant que deuxième mesure.

5. Appareil (102) selon la revendication 1, dans lequel les moyens de transmission vidéo (110) comprennent un générateur de signal pour générer le signal d'essai.

6. Appareil (102) selon la revendication 5, dans lequel la séquence d'images d'essai correspond à une seule image.

7. Appareil (102) selon la revendication 5, dans lequel le générateur de signal est agencé de manière à générer une configuration d'essai.

8. Appareil (102) selon la revendication 7, dans lequel la configuration d'essai comprend des images alternativement plus foncées et plus claires.

9. Appareil (102) selon la revendication 8, dans lequel les images plus foncées et plus claires se répètent à un intervalle qui est au moins deux fois plus long que le retard de traitement.

10. Source vidéo (101) pour fournir une sortie vidéo et une sortie audio connexe, la source vidéo comprenant:
- des moyens de sortie vidéo (102) pour fournir la sortie vidéo;
- des moyens de sortie audio (104) pour fournir la sortie audio;
- un appareil (102) pour compenser la perte de synchronisation entre la vidéo et l'audio qui est présentée à un spectateur, selon l'une quelconque des revendications précédentes 1 à 9, la vidéo étant basée sur la sortie vidéo et l'audio étant basée sur la sortie audio.

11. Source vidéo (101) selon la revendication 10, comprenant un dispositif de retard audio 18 pour effectuer un retard commandable dans la sortie audio sur la base du signal de retard audio de l'appareil (102) à titre de compensation.

12. Procédé pour compenser la perte de synchronisation entre la vidéo et l'audio qui est présentée à un spectateur en raison d'un retard de traitement de la vidéo, ledit procédé comprenant:
- la transmission d'un signal d'essai représentant une séquence d'images d'essai à présenter par un dispositif d'affichage après que ledit signal d'essai est soumis audit retard de traitement;
- la détection de lumière en provenance du dispositif d'affichage sur la base de la séquence d'images d'essai et la production d'un signal d'essai reçu qui est représentatif de la séquence d'images d'essai; et
- la corrélation du signal d'essai reçu avec le signal d'essai transmis;
- la détermination du retard entre lesdits signaux et la sortie d'un signal de retard audio sur la base du retard entre lesdits signaux.
